Europäisches Patentamt

European Patent Office

Office européen des brevets

(11) Publication number: **0 412 646 A2**

# EUROPEAN PATENT APPLICATION

(21) Application number: **90307245.2**

(51) Int. Cl.⁵: **G01J 5/06**

(22) Date of filing: **03.07.90**

The title of the invention has been amended (Guidelines for Examination in the EPO, A-III, 7.3).

(30) Priority: **08.07.89 GB 8915691**

(43) Date of publication of application:
**13.02.91 Bulletin 91/07**

(84) Designated Contracting States:
**BE DE FR IT**

(71) Applicant: **GEC-MARCONI LIMITED**
**The Grove, Warren Lane**
**Stanmore, Middlesex HA7 4LY(GB)**

(72) Inventor: **Smith, Brian Frederick**
**4 Navestock Close**
**Rayleigh, Essex(GB)**

(74) Representative: **Waters, Jeffrey et al**
**GEC Patent Department (Chelmsford Office)**
**GEC-Marconi Research Centre, West**
**Hanningfield Road**
**Great Baddow, Chelmsford, Essex CM2**
**8HN(GB)**

(54) **Reflecting means for infrared detectors.**

(57) In a thermal imaging system for passive imaging of infra-red rays, a converging imaging cone is incident on a detector 2. To shield the detector from rays outside the imaging cone which would cause noise, a thin plate 10 is provided and, since the detector is cooled but the plate is not and therefore generates infra-red radiation, the plate is formed as a Fresnel reflector to reflect radiation emanating from the detector back onto itself. As compared with the conventional "cold shield" reflector which has a spherical reflecting surface, the use of a plate formed as a Fresnel reflector makes the imaging system thinner in the axial direction in the region of the detector.

Fig. 2

EP 0 412 646 A2

## THERMAL IMAGING SYSTEMS

This invention relates to thermal imaging, that is, imaging of thermally-emitted electromagnetic waves, generally infra-red waves.

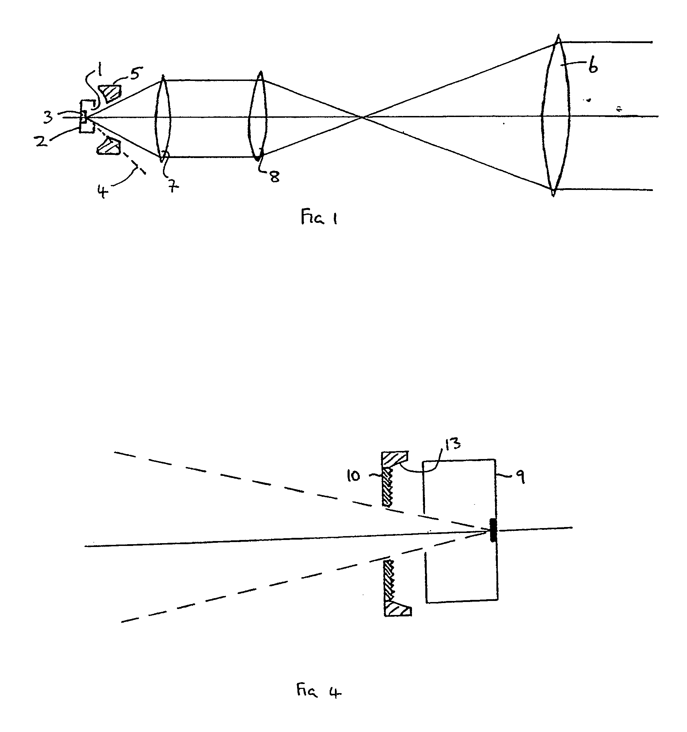

Thermal imagers are commonly used to view objects whose temperatures are close to ambient, perhaps differing from ambient by only 5° C. or less. This reduces the maximum possible signal-to-noise ratio to a value normally referred to as the background limited. However, in practice, even this value of signal-to-noise ratio would be reduced if radiation from outside the solid angle of the imaging beam is incident on the detector. Referring to Figure 1, it might at first be thought that noise from outside the imaging solid angle could be excluded by reducing the size of window 1 at the front of detector 2. However, this opening has to be wide enough to accept imaging cones directed to extreme parts of the detecting element 3, and is often wider than that and, as a proprietary item, cannot readily be modified.

It would not be possible to mask such rays as 4 with an iris outside the detector, because the iris would be at ambient temperature and would itself be a source of noise. To reduce the noise in the detector as far as possible, it is cooled, both element 3 and the remainder of the interior of the detector 2.

The solution usually adopted to prevent rays such as 4 entering the detector is to use a shield 5 which has a spherical reflecting surface on the side facing the detector 2 in order to reflect rays emanating from the detector window 1, outside the solid angles of the imaging beam, back into the detector opening. Thus, instead of viewing a radiating iris, the detector opening simply views a cold surface with negligible emissions. The center of curvature of the so-called "cold shield" is in the region of the detector window. The cold shield closely matches the envelope of the imaging beams.

The invention provides a thermal imaging system comprising a detector arranged to receive a converging imaging beam, reflecting means having an aperture which in use surrounds the converging imaging beam, the reflecting means being arranged to reflect rays emanating from the detector outside the solid angle of the imaging beam back onto the detector, the reflecting means comprising a Fresnel reflector.

The Fresnel reflector is axially much thinner than the spherical reflecting surface and is particularly useful in applications where space is limited close to the detector.

Such a Fresnel reflector can be produced by applying concentric rulings to a flat plate. The reflecting surface can be metallised to maximise its efficiency.

The invention will now be described in detail with reference to the accompanying drawings, in which;

Figure 1 is an axial section of a known thermal imaging system;

Figure 2 is an axial section of a part of a thermal imaging system according to the invention;

Figure 3 is an enlarged view of the Fresnel reflector and the window of the detector; and

Figure 4 is an axial section of a part of another thermal imaging system according to the invention.

Referring to Figure 1, the known thermal imaging system has an objective 6 for receiving infra-red rays from a scene to be imaged and lenses 7, 8 for imaging the beam onto a detecting element of the detector 2. A cold shield 5 has a spherical reflecting surface and reflects back onto the detector rays which emanate from the detector outside the solid angle of the imaging cone. The imaging system is scanned across the scene to be viewed by means of a scanner (not shown) positioned between lenses 7 and 8.

In accordance with the invention, the cold shield with spherical reflecting surface is replaced by a Fresnel reflector.

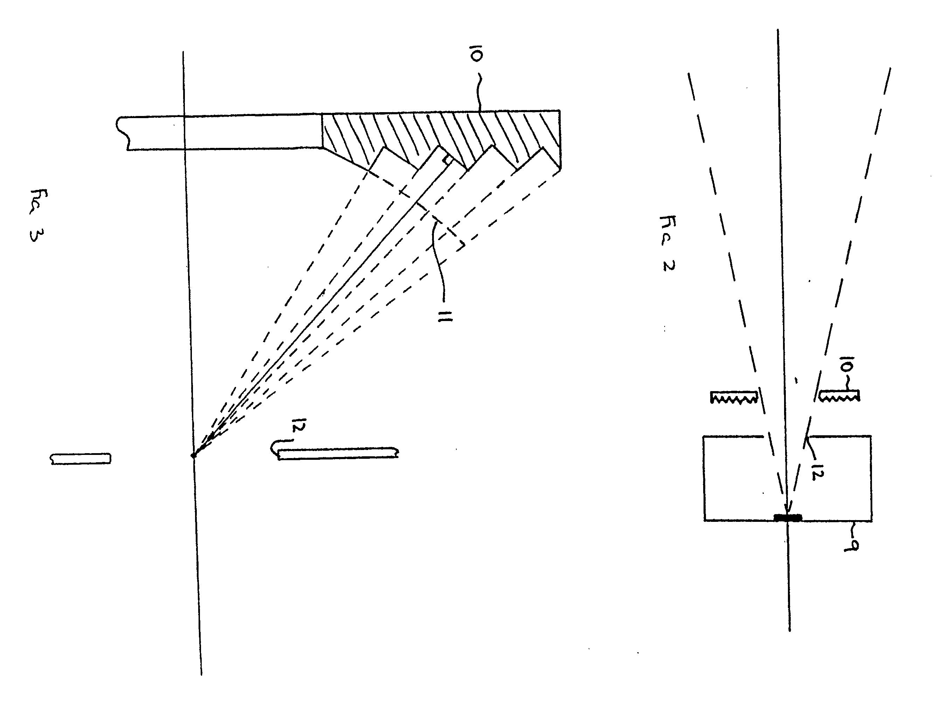

Referring to Figure 2, only the detector 9 and Fresnel reflector shield 10 are shown. The other components of the system are as shown in Figure 1. Referring to Figure 3, if a conventional cold shield spherical reflector was used such as that indicated by reference numeral 5 in Figure 1, the reflecting surface would be as shown by the dotted line 11 i.e. a center of curvature centered on the mid-point of the window 12 at the front of the detector 9. In a Fresnel reflector, the reflecting surface is formed by a number of concentric rings 10a, 10b etc. formed in a flat surface. Dotted lines represent cones centered on the center of the window 12 between which the concentric rings 10a, 10b lie. The inclination of each of the rings is the same as that of the corresponding ring of the dotted spherical surface lying between the same cones. Thus, the effect of the Fresnel reflector is approximately as would be given by a spherical lens 11, but the axial extent of the Fresnel reflector is much less than that of a mirror with a spherical reflecting surface.

Each of the rings 10a, 10b etc., are formed by applying concentric rulings to a flat plate. Thereafter, the reflecting face is metallised to increase its reflectivity. The Fresnel mirror approaches the performance of a spherical mirror the more rulings that

3

24444444444are applied.

The Fresnel reflector therefore reflects back onto the detector those rays which emanate from it outside the solid angle of the imaging beam, so that the detector merely views an image of itself, which is of course at low temperature since the detector is cooled.

Referring to Figure 4, for applications where a large numerical aperture is required, the Fresnel reflector may be surrounded by a spherical reflector 13. The overall width of the combined reflector is still considerably less than that of a spherical reflector.

Fresnel reflectors can be manufactured cheaply by machining from a standard blank or by moulding techniques.

## Claims

1. A thermal imaging system, comprising a detector arranged to receive a converging imaging beams, reflecting means having an aperture which in use surrounds the converging imaging beam, the reflecting means being arranged to reflect rays emanating from the detector outside the solid angle of the imaging beam back onto the detector, the reflecting means comprising a Fresnel reflector.

2. A thermal imaging system as claimed in claim 1, in which a spherical reflector surrounds the Fresnel reflector.

3. A thermal imaging system as claimed in claim 1 or claim 2, in which the Fresnel reflector is formed from a flat surface to which rulings have been applied.

4. A thermal imaging system substantially as herein described with reference to the accompanying drawings.

3

Fig 1

Fig 4

4

Fig 2

Fig 3